# EUROPEAN PATENT APPLICATION

(11) **EP 3 604 755 A1**
(43) Date of publication of application: **05.02.2020**
(21) Application number: 18777818.8
(22) Date of filing: 13.03.2018
(51) Int. Cl.: F01N 3/24

(54) **REACTOR**

(30) Priority: 31.03.2017 JP 2017070919
(71) Applicant: Hino Motors, Ltd., Hino-shi, Tokyo 191-8660 (JP)
(72) Inventor: TOMITA, Noriyuki, Hino-shi Tokyo 191-8660 (JP); TONGU, Hirofumi, Hino-shi Tokyo 191-8660 (JP); TSURUTA, Tomoyuki, Hino-shi Tokyo 191-0003 (JP)
(74) Representative: Louis Pöhlau Lohrentz
(86) International application number: PCT/JP2018/009690
(87) International publication number: WO 2018/180457

(57) **Abstract**

Disclosed is a reactor 8 located in a gas gathering chamber 7A (flow change portion) through which exhaust gas 1 in an exhaust system flows curvedly. Urea water 10 (addition agent) sprayed against the reactor 8 from upstream of the chamber 7A to facilitate gasification through heat receiving. Provided are rectification vanes 12 arrayed in a direction bisecting an angle formed by inflow and outflow directions of the exhaust gas 1 (see arrows x and y) and a support 13 for supporting opposite ends of each of the vanes 12. Opposite ends of the vanes 12 are inserted into slots 14 on slanting sides of opposite side walls 13a in the support 13 to provide installed state. The vanes 12 in the installed state are adapted to provide mounted postures along the flow of the exhaust gas 1.

## Description

### Technical Field

The present invention relates to a reactor against which an addition agent sprayed from upstream is impinged for facilitated gasification thereof through heat receiving.

### Background Art

Conventionally, some diesel engines have a selective reduction catalyst incorporated in an exhaust pipe through which exhaust gas flows and having a property of selectively reacting NOₓ (nitrogen oxides) with a reducing agent even in the presence of oxygen. A required amount of reducing agent is added upstream of the selective reduction catalyst and is reductively reacted on the catalyst with NOₓ in the exhaust gas to thereby reduce a concentration of discharged NOₓ.

Meanwhile, effectiveness of ammonia (NH₃) used as a reducing agent for reduction and purification of NOₓ is well known in a field of industrial flue gas denitration in a plant or the like. However, in a field of automobile where safety is hard to assure as to running with ammonia itself being loaded, it has been proposed to use urea water as a reducing agent.

Specifically, the urea water added into the exhaust gas upstream of the selective reduction catalyst is hydrolyzed into ammonia and carbon dioxide gas according to the following formula to satisfactorily depurate NOₓ in the exhaust gas through reduction on the catalyst by the ammonia.

(NH₂)₂CO + H₂O → 2NH₃ + CO₂

For effectively facilitated transformation of the urea water into ammonia, it is necessary to positively facilitate gasification of the urea water to proceed with substantive chemical reaction for ammonia production. It has been suggested by some of inventors in the present invention (see below-mentioned Patent Literature 1) that, as shown in Fig. 1, a reactor d is located in a bent portion b (flow change portion where exhaust gas c flows curvedly) halfway in an exhaust pipe a; urea water f is sprayed from upstream by an injector e against the reactor d to impinge the sprayed urea water f on rectification vanes g of the reactor d for facilitated gasification thereof through heat receiving.

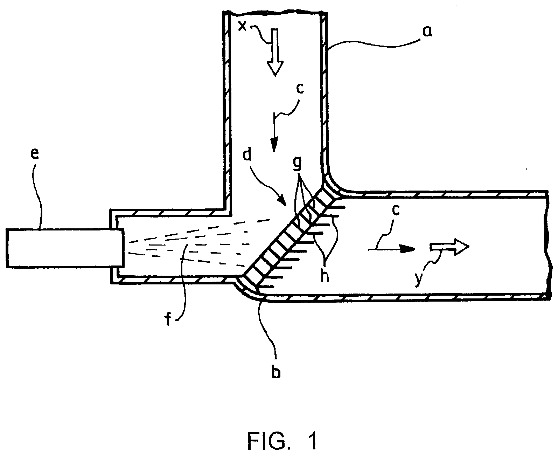

Specifically, employed is a structure such that the rectification vanes g are arrayed in a direction substantially bisecting an angle formed by inflow and outflow directions of the exhaust gas c flowing from upstream of and out downstream of the bent portion b (see arrows x and y in Fig. 1), respectively.

Each of the rectification vanes g is mounted to take a mounted posture along the flow of the exhaust gas c flowing curvedly in the bent portion b and has a downstream fin h which guides the flow of the exhaust gas c to the outflow direction from the bent portion b to afford a rectification effect to the exhaust gas c flowing curvedly in the bent portion b.

### Citation List

### Patent Literature

Patent Literature 1: JP 2015-218687A

### Summary of Invention

### Technical Problems

However, such a conventional proposal merely conceptually explains an arrayed condition and mounted postures of the rectification vanes g and has no technically specific disclosure on how to support the rectification vanes g. Even if the rectification vanes g were to be fixed to a flow passage wall of the bent portion b simply by welding or the like, to array the rectification vanes g in the direction substantially bisecting the angle formed by the inflow and outflow directions of the exhaust gas c to and from the bent portion b to take appropriate mounted postures would require troublesome positioning of the rectification vanes g through some jig. Thus, it is feared that the reactor d cannot be easily fabricated.

The invention was made in view of the above and has its object to provide a reactor which can be easily fabricated without needing to position rectification vanes by a jig.

### Solution to Problems

The invention is directed to a reactor located in a flow change portion through which exhaust gas in an exhaust system flows curvedly, an addition agent sprayed from upstream of said flow change portion being impinged against the reactor to facilitate gasification thereof through heat receiving, characterized in that it comprises a plurality of rectification vanes arrayed in a direction substantially bisecting an angle formed by inflow and outflow directions of the exhaust gas to and from said flow change portion and a support which supports opposite ends of each of said rectification vanes and is to be received in said flow change portion, said support being provided with a pair of opposite side walls each providing a slanting side in an arrayed direction of said rectification vanes, a plurality of slots being formed on each of said slanting sides of said opposite side walls, the opposite ends of each of said rectification vanes being inserted from upstream into said slots to provide an installed state, said rectification vanes in said installed state being adapted to provide mounted postures along the flow of the exhaust gas.

Then, to insert the opposite ends of each of the rectification vanes from upstream into the slots on the slanting sides of the opposite side walls of the support causes the vane to be simply installed while regulated to provide a mounted posture along the flow of the exhaust gas. Thus, without needing to position the rectification vanes through a jig, the vanes can be arrayed and supported in the direction substantially bisecting the angle formed by the inflow and outflow directions of the exhaust gas into and from the flow change portion to provide the appropriate mounted postures.

It is preferable in the invention that each of the rectification vanes has a downstream fin which guides the flow of the exhaust gas to the outflow direction from the flow change portion. Then, the flow of the exhaust gas rectified by passing thereof between the rectification vanes is smoothly guided by the fins to the outflow direction from the flow change portion.

It is preferable in the invention that the support is provided with a downstream fixing ring to be fitted into a flow passage wall of the flow change portion. Then, the reactor is simply fixed by fitting the fixing ring into the flow passage wall of the flow change portion when the reactor preassembled from the rectification vanes and the support is received in the flow change portion for fixing.

### Advantageous Effects of Invention

The reactor of the invention as mentioned in the above can exhibit various excellent effects as follows.
(I) To insert the opposite ends of the rectification vanes into the slots on the slanting sides of the opposite side walls of the support can cause the vanes to be simply installed. The installation can cause the rectification vanes to be regulated to provide mounted postures along the flow of the exhaust gas. Thus, the reactor can be easily fabricated without needing to position the rectification vanes by a jig upon arraying and supporting of the vanes in the direction substantially bisecting the angle formed by the inflow and outflow directions of the exhaust gas into and from the flow change portion.
(II) If each of the rectification vanes has the downstream fin which guides the flow of the exhaust gas to the outflow direction from the flow change portion, the flow of the exhaust gas rectified by passing thereof between the rectification vanes can be smoothly guided by the fins to the outflow direction of the flow change portion. Thus, the rectification effect by the rectification vanes can be further enhanced to further reduce the pressure loss.
(III) If the support is provided with the downstream fixing ring to be fitted into the flow passage wall of the flow change portion, the reactor can be simply fixed by fitting the fixing ring into the flow passage wall of the flow change portion when the reactor preassembled from the rectification vanes and the support is received in the flow change portion for fixing.

### Brief Description of Drawings

Fig. 1 is a sectional view conceptually showing a conventional example;
Fig. 2 is a schematic diagram showing an embodiment of the invention;
Fig. 3 is a view looking in a direction of arrows III in Fig. 2;
Fig. 4 is a sectional view looking in a direction of arrows IV in Fig. 3; and
Fig. 5 is a perspective view showing particulars of a reactor shown in Fig. 4.

### Description of Embodiment

An embodiment of the invention will be described in conjunction with the drawings.

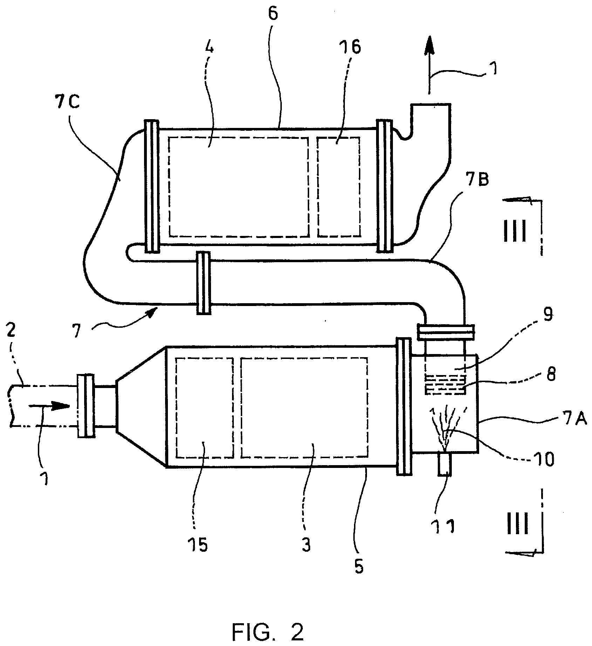

Fig. 2 shows the embodiment of the invention applied to an exhaust emission control device detailed hereinafter. More specifically, in the exhaust emission control device to which the embodiment is applied, incorporated in an exhaust pipe 2 through which exhaust gas 1 from an engine flows and housed in casings 5 and 6 in parallel with each other are a particulate filer 3 for capturing particulates in the exhaust gas 1 and a selective reduction catalyst 4 downstream of the particulate filter 3 and having a property of selectively reacting NOₓ with ammonia even in the presence of oxygen, a communication passage 7 being provided to oppositely turn the exhaust gas 1 discharged from an exit side of the particulate filter 3 into an entry side of the adjacent selective reduction catalyst 4, a reactor 8 being applied to and arranged in a flow change portion most upstream in the communication passage 7.

Specifically, the communication passage 7 is an S-shaped structure comprising a gas gathering chamber 7A which encircles an exit end of the particulate filter 3 to gather the exhaust gas 1 discharged therefrom through substantially perpendicular turnabout of the gas, a communication pipe 7B which extracts the exhaust gas 1 gathered in the gas gathering chamber 7A from an exhaust outlet 9 into the entry side of the selective reduction catalyst 4 and a gas dispersion chamber 7c which encircles the entry side of the selective reduction catalyst 4 to disperse the exhaust gas 1 guided by the communication pipe 7B through substantially perpendicular turnabout of the gas into the entry side of the selective reduction catalyst 4.

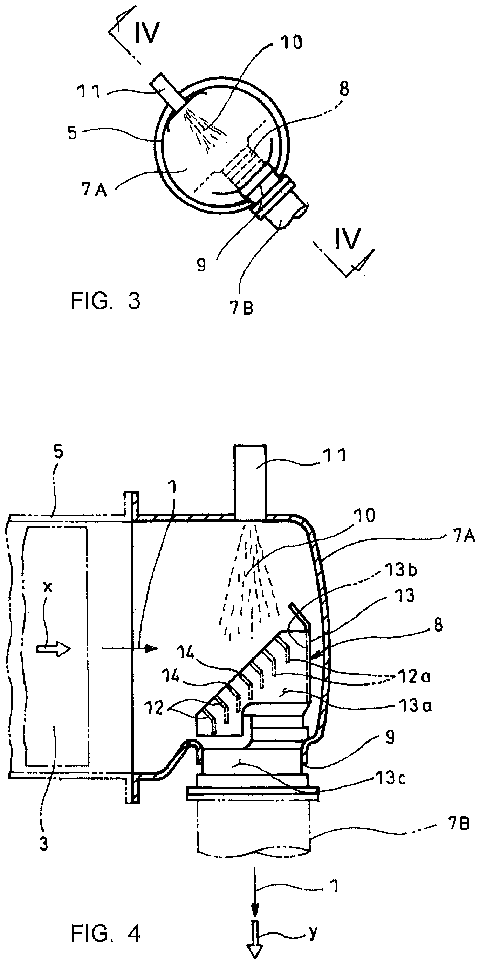

As shown in Fig. 3, the exhaust outlet 9 of the gas gathering chamber 7A is opened directed slantly downward in an anglarily deviated manner from a direct downward direction of the gas gathering chamber 7A toward the selective reduction catalyst 4. An injector 11 is attached to the gas gathering chamber 7A on a slantly upward position opposed to the exhaust outlet 9 such that urea water 10 may be injected to the exhaust outlet 9. The exhaust outlet 9 of the gas gathering chamber 7A is provided with a reactor 8 against which the urea water 10 sprayed by the injector 11 is impinged for facilitated gasification thereof.

Here, as shown in Fig. 4, the gas gathering chamber 7A which is most upstream in the communication passage 7 is the flow change portion (where the exhaust gas 1 flows curvedly) to which the reactor 8 in the embodiment is applied. The reactor 8 is provided with a plurality of rectification vanes 12 arrayed in a direction substantially bisecting an angle formed by inflow and outflow directions (see arrows x and y in Fig. 4) of the exhaust gas 1 into and from the gas gathering chamber 7A and a support 13 which supports opposite ends of each of the rectification vanes 12 and is to be received in the gas gathering chamber 7A.

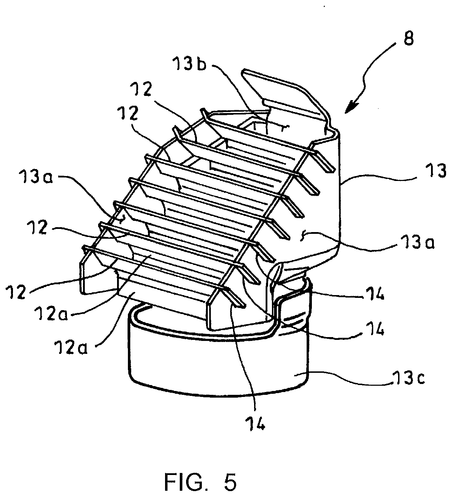

Specifically as shown in Fig. 5, the support 13 has a pair of opposite side walls 13a each providing a slanting side in the arrayed direction of the rectification vanes 12. A plurality of slots 14 are formed on each of the slanting sides of the opposite side walls 13a. Opposite ends of each of the rectification vanes 12 are inserted from upstream into the slots 14 to provide an installed state; the rectification vanes 12 in the installed state are adapted to provide mounted postures (postures with less pressure loss set by flow analysis of the exhaust gas 1) along the flow of the exhaust gas 1; moreover, especially in the embodiment, each of the rectification vanes 12 except opposite ends thereof has a downstream fin 12a which guides the flow of the exhaust gas 1 to outflow direction from the gas gathering chamber 7A.

The opposite side walls 13a are interconnected through a rear wall 13b which provides a shield face to the inflow direction of the exhaust gas 1 on a downstream side of the rectification vanes 12. Provided downstream of the opposite side walls 13a and the rear wall 13b and integrally continuous therewith is a fixing ring 13c which is cylindrical in the outflow direction of the gas gathering chamber 7A and is to be fitted into a flow passage wall at the exhaust outlet 9 of the gas gathering chamber 7A.

In the exhaust emission control device illustrated in Fig. 2, arranged in the casing 5 upstream of the particulate filter 3 is an oxidation catalyst 15 for oxidization treatment of unburned fuel components in the exhaust gas 1, and arranged in the casting 6 downstream of the selective reduction catalyst 4 is an ammonia reducing catalyst 16 for oxidization treatment of surplus ammonia.

With the reactor 8 thus constructed, to insert the opposite ends of each of the rectification vanes 12 from upstream into the slots 14 formed on the slanting sides of the opposite side walls in the support 13 causes the rectification vane 12 to be simply installed while regulated to provide a mounted posture along the flow of the exhaust gas 1; without needing to position the rectification vanes 12 using a jig, the vanes 12 can be arrayed and supported in a direction substantially bisecting an angle formed by inflow and outflow directions of the exhaust gas 1 to and from the gas gathering chamber 7A to provide the appropriate mounted postures.

Further, specifically in the embodiment, each of the rectification vanes 12 is provided with a downstream fin 12a which guides the flow of the exhaust gas 1 to the outflow direction from the gas gathering chamber 7A, so that the flow of the exhaust gas 1 rectified by passing thereof between the rectification vanes 12 is smoothly guided by the fins 12a to the outflow direction from the gas gathering chamber 7A.

Further, the support 13 is provided with the downstream fixing ring 13c which is to be fitted into the flow passage wall of the gas gathering chamber 7A, so that the reactor 4 can be simply fixed by fitting the fixing ring 13c into the flow passage wall of the gas gathering chamber 7A when the reactor 8 preassembled from the rectification vanes 12 and the support 13 is received in the flow passage wall of the gas gathering chamber 7A for fixing.

Thus, according to the above embodiment, to insert the opposite ends of the rectification vanes 12 into the slots 14 on the slanting sides of the opposite side walls 13a in the support 13 can cause the vanes 12 to be simply installed. The installation can cause the rectification vanes to be regulated to provide the mounted postures along the flow of the exhaust gas. Thus, the reactor 8 can be easily fabricated without needing to position the rectification vanes 12 by a jig upon arraying and supporting of the vanes 12 in the direction substantially bisecting the angle formed by the inflow and outflow directions of the exhaust gas 1 to and from the gas gathering chamber 7A.

Further, each of the rectification vanes 12 has a downstream fin 12a which guides the flow of the exhaust gas 1 to the outflow direction from the gas gathering chamber 7A, so that the flow of the exhaust gas 1 rectified by passing thereof between the rectification vanes 12 can be smoothly guided by the fins 12a to the outflow direction from the gas gathering chamber 7A, whereby the rectifying effect by the rectification vanes 12 can be further enhanced to further reduce the pressure loss.

Further, the support 13 is provided with the downstream fixing ring 13c to be fitted into the flow passage wall of the gas gathering chamber 7A, so that the reactor 8 can be simply fixed by fitting the fixing ring 13c into the flow passage wall of the gas gathering chamber 7A when the reactor 8 preassembled by the rectification vanes 12 and the support 13 is received in the gas gathering chamber 7A for fixing.

It is to be understood that a reactor according to the invention is not limited to the above embodiment and that various changes and modifications may be made without departing from the scope of the invention. For example, the description has been made in the embodiment using Figs. 2-5 in a case where the addition agent is urea water; alternatively the addition agent may be fuel, provided that the selective reduction catalyst has a property of selectively reacting NOₓ with HC gas even in the presence of oxygen. The addition agent is not limited to that added as reducing agent upstream of the selective reduction catalyst; the invention may be applied to various addition agents which require gasification.

### Reference Signs List

- 1: exhaust gas
- 7A: gas gathering chamber (flow change portion)
- 8: reactor
- 10: urea water (addition agent)
- 12: rectification vane
- 12a: fin
- 13: support
- 13a: opposite side walls
- 13c: fixing ring
- 14: slot

## Claims

1. A reactor located in a flow change portion through which exhaust gas in an exhaust system flows curvedly, an addition agent sprayed from upstream of said flow change portion being impinged against the reactor to facilitate gasification thereof through heat receiving, wherein it comprises a plurality of rectification vanes arrayed in a direction substantially bisecting an angle formed by inflow and outflow directions of the exhaust gas to and from said flow change portion and a support which supports opposite ends of each of said rectification vanes and is to be received in said flow change portion, said support being provided with a pair of opposite side walls each providing a slanting side in an arrayed direction of said rectification vanes, a plurality of slots being formed on each of said slanting sides of said opposite side walls, the opposite ends of each of said rectification vanes being inserted from upstream into said slots to provide an installed state, said rectification vanes in said installed state being adapted to provide mounted postures along the flow of the exhaust gas.

2. The reactor as claimed in claim 1 wherein each of the rectification vanes has a downstream fin which guides the flow of the exhaust gas to the outflow direction from the flow change portion.

3. The reactor as claimed in claim 1 or 2 wherein the support is provided with a downstream fixing ring to be fitted into a flow passage wall of the flow change portion.
